(19) Europäisches Patentamt / European Patent Office / Office européen des brevets

(11) **EP 3 292 668 B1**

(12) **FASCICULE DE BREVET EUROPEEN**

(45) Date de publication et mention
de la délivrance du brevet:
**27.02.2019 Bulletin 2019/09**

(51) Int Cl.:
***H04L 27/26*** *(2006.01)*

(21) Numéro de dépôt: **16722594.5**

(22) Date de dépôt: **03.05.2016**

(86) Numéro de dépôt international:
**PCT/EP2016/059947**

(87) Numéro de publication internationale:
**WO 2016/177757 (10.11.2016 Gazette 2016/45)**

(54) **RÉDUCTION DU RAPPORT PUISSANCE CRÊTE À PUISSANCE MOYENNE D'UN SIGNAL MULTIPORTEUSE**

REDUKTION VON SPITZEN-ZU-DURCHSCHNITTSLEISTUNG IN EINEM MEHRTRÄGERSIGNAL

PEAK-TO-AVERAGE POWER RATIO REDUCTION IN A MULTI-CARRIER SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2015 FR 1554085**

(43) Date de publication de la demande:
**14.03.2018 Bulletin 2018/11**

(73) Titulaires:
• **Institut National des Sciences Appliquées (INSA)**
**35708 Rennes Cédex 07 (FR)**
• **American University Of Beirut**
**Beirut 1107-2020 (LB)**

(72) Inventeurs:
• **MOUNZER, Ralph**
**Maten (LB)**
• **CRUSSIERE, Matthieu**
**35890 Laille (FR)**
• **HELARD, Jean-François**
**35700 Rennes (FR)**
• **NASSER, Youssef**
**Hadath (LB)**

(74) Mandataire: **Vidon Brevets & Stratégie**
**16B, rue de Jouanet**
**BP 90333**
**35703 Rennes Cedex 7 (FR)**

(56) Documents cités:
**CN-A- 104 144 140**

• **BOONSRIMUANG P ET AL: "PROPOSAL OF SIMPLE PAPR REDUCTION METHOD FOR OFDM SIGNAL BY USING DUMMY SUB-CARRIERS", IEICE TRANSACTIONS ON COMMUNICATIONS, COMMUNICATIONS SOCIETY, TOKYO, JP, vol. E91B, no. 3, 1 mars 2008 (2008-03-01) , pages 784-794, XP001513700, ISSN: 0916-8516, DOI: 10.1093/IETCOM/E91-B.3.784**
• **JIAO Y Z ET AL: "A Novel Tone Reservation Scheme with Fast Convergence for PAPR Reduction in OFDM Systems", CONSUMER COMMUNICATIONS AND NETWORKING CONFERENCE, 2008. CCNC 2008. 5TH IEEE, IEEE CCP, PISCATAWAY, NJ, USA, 1 janvier 2008 (2008-01-01), pages 398-402, XP031211904, DOI: 10.1109/CCNC08.2007.95 ISBN: 978-1-4244-1456-7**

**Description**

**1. Domaine de l'invention**

Le domaine de l'invention est celui de la transmission de signaux numériques pour lesquelles une modulation multiporteuse, notamment de type OFDM (« Orthogonal Frequency Division Multiplex » en anglais, pour « multiplexage par répartition orthogonale en fréquence »), est utilisée.

Plus précisément, la modulation OFDM est de plus en plus utilisée pour la transmission numérique, en particulier sur les canaux de transmission à trajets multiples. Cette technique de modulation multiporteuse permet notamment de s'affranchir de l'interférence entre symboles généralement observée lorsqu'on utilise une modulation monoporteuse sur un canal à trajets multiples. En outre, cette technique présente une très bonne efficacité spectrale et permet d'économiser des ressources spectrales radio par la mise en oeuvre de réseaux mono-fréquence.

Du fait de sa robustesse intrinsèque aux canaux sélectifs en fréquence, la modulation OFDM est notamment, mais non exclusivement, utilisée dans les réseaux locaux sans-fil (WiFI ou WiMAX), la radiotéléphonie mobile cellulaire 3GPP LTE ou LTE Advanced (de l'anglais « 3rd Generation Partnership Project » et « Long Term Evolution »), ou encore l'ADSL (de l'anglais « *Asymmetric Digital Subscriber Line* ») et l'HIPERLAN/2 (de l'anglais « *HIgh PErformance Radio Local Area Network* »), mais aussi pour des standards tels que ceux relatifs à la diffusion Audio Numérique (DAB pour « *Digital Audio Broadcasting* » en anglais), la diffusion Vidéo Numérique (DVB pour « *Digital Video Broadcasting* » en anglais, notamment DVB-T (une norme de la télévision numérique terrestre), DVB-T2, DVB-NGH (de l'anglais « DVB - *Next Generation Handheld»,* une norme de diffusion de la télévision numérique terrestre sur terminal mobile), ou encore la future norme de télévision numérique ATSC 3.0, destinée à offrir une expérience audio immersive pour salon et téléspectateurs mobiles, et proposée par le comité américain sur les systèmes de télévision évoluée (de l'anglais « *ATSC -Advanced Television Systems Committee »).*

**2. Art antérieur**

**2.1 Inconvénients de la modulation OFDM**

Un inconvénient majeur de la technique OFDM est inhérent aux fortes fluctuations en amplitude de l'enveloppe du signal modulé et donc aux variations importantes de la puissance instantanée.

En effet, dans le domaine temporel, la sommation de ces multiples porteuses modulées de façon indépendante s'effectue en puissance la majeur partie du temps, mais aussi de façon cohérente ce qui conduit à des pics de puissance instantanée qui peuvent surpasser de plus de 10 dB la puissance moyenne du signal à certains instants.

Le rapport puissance crête à puissance moyenne (PAPR, pour « *Peak to Average Power Ratio* » en anglais) des signaux émis est ainsi généralement très élevé et il augmente avec le nombre de porteuses N.

Les amplificateurs de puissance présentent des caractéristiques non-linéaires qui, couplées à l'amplification des signaux dits à fort PAPR conduisent à des distorsions : remontée spectrale du niveau des lobes secondaires, génération d'harmoniques, création d'interférences entre symboles non linéaires, création d'interférences entre porteuses. Ainsi, ces distorsions entraînent notamment des erreurs de transmission et une dégradation du taux d'erreur binaire (TEB).

**2.2 Art antérieur pour la réduction du PAPR**

Dans la littérature, de nombreuses techniques ont déjà été proposées pour pallier ce problème.

Une solution courante consiste à s'assurer que la plage de fonctionnement de l'amplificateur reste limitée à une zone d'amplification linéaire, ce qui limite malheureusement le rendement de l'amplificateur (quelques % au lieu de, classiquement, 50 %) et donc une augmentation importante de la consommation de l'émetteur. Ceci est une contrainte très forte pour l'utilisation de l'OFDM notamment dans des émetteurs à forte puissance, tels que des stations de télédiffusion numérique, stations de base de réseaux cellulaires, sachant que la consommation de l'amplificateur de puissance peut représenter plus de 50% de l'énergie dépensée par l'émetteur pour assurer le service.

Une deuxième approche est appelée « *Selected Mapping* », consiste à appliquer à chaque symbole de la séquence à transmettre une rotation de phase. Plusieurs motifs de rotation de phase peuvent être définis. Pour chaque motif appliqué à la séquence à transmettre, on effectue les opérations pour obtenir un signal OFDM correspondant, et on transmet celui présentant le plus faible PAPR. De nouveau cette technique n'apporte pas de distorsion, mais elle nécessite de communiquer au récepteur la séquence de rotation utilisée à l'émission avec une très grande fiabilité, ce qui conduit à une réduction de l'efficacité spectrale et une augmentation significative de la complexité du système pour acheminer le numéro du motif utilisé via un canal dédié. En outre, si cette transmission est erronée, toute la trame OFDM sera perdue. Elle augmente également la complexité à l'émission, puisque plusieurs traitements doivent être effectués en parallèle, pour choisir ensuite le plus efficace. Les autres traitements ont été effectués inutilement, et ne sont pas exploités.

Une troisième approche, appelée communément « technique ACE (de l'anglais « *Active Constellation Extension* ») » est basée sur une modification de constellation et repose sur un déplacement effectué dans le sens d'un éloignement des axes de décision. Cependant, cette technique se caractérise par une efficacité moindre pour des constellations d'ordre élevé et par l'accroissement de la puissance moyenne du signal, et par une complexité de calcul très élevée.

Une quatrième approche est basée sur un ajout de signal pour diminuer le PAPR. Plus précisément, le signal ajouté présente des pics d'amplitude en opposition de phase avec ceux du signal que l'on veut corriger.

La technique de « *clipping* », ou limiteur, qui consiste à écrêter l'amplitude du signal lorsqu'il dépasse une valeur seuil prédéterminée, est également une méthode d'ajout de signal. En effet, le « clipping » consiste à supprimer du signal, cependant une telle suppression est mathématiquement équivalente à ajouter un signal correcteur.

Cependant, cet écrêtage est par nature non linéaire et introduit une distorsion du signal émis se traduisant non seulement par un TEB dégradé mais également par une remontée des lobes secondaires de la DSP (Densité Spectrale de Puissance).

Une autre technique d'ajout de signal, appelée communément « technique TR (de l'anglais « *Tone Reservation »*) », propose de réserver certaines porteuses du multiplex OFDM, qui ne transportent pas d'informations mais des symboles optimisés à l'émission pour réduire le PAPR. L'optimisation de ces symboles peut être effectuée en utilisant par exemple un algorithme d'optimisation convexe de type SOCP (de l'anglais « *Second Order Cone Programming »*). Cette technique n'apporte pas de distorsion au signal émis. Toutefois, un inconvénient majeur de cette méthode réside dans le fait qu'un certain nombre de porteuses, doivent être réservées pour pouvoir réduire le PAPR de façon significative. Ces porteuses ne sont pas utilisées pour émettre des données d'informations utiles, ce qui conduit à une réduction de l'efficacité spectrale.

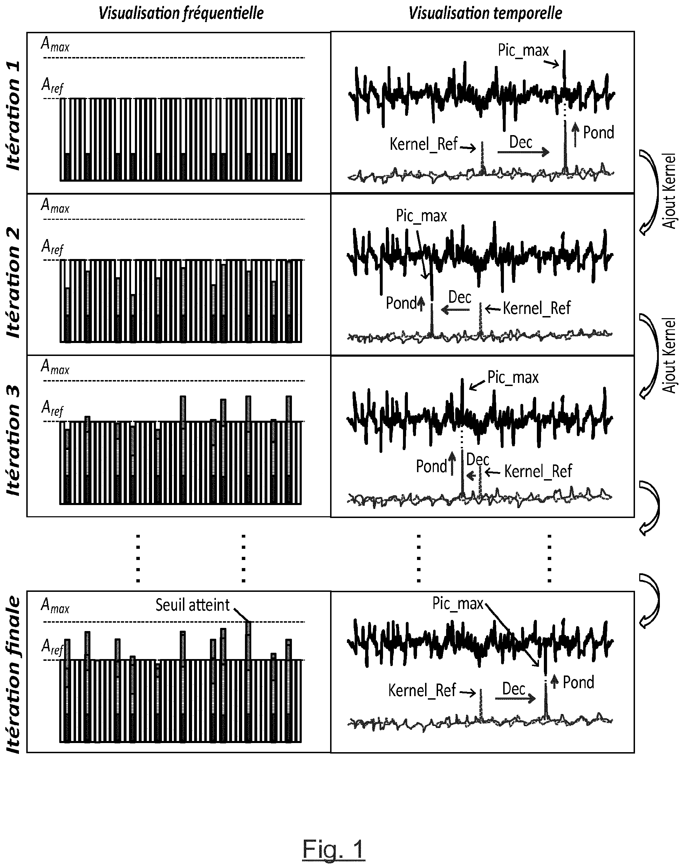

Parmi les « techniques TR (*Tone Reservation*) » connues figure notamment la méthode du gradient illustrée par la **figure 1,** (de l'anglais « *TR-Gradient-Based Technique* ») dont la mise en oeuvre a été retenue, par exemple, pour les normes DVB-T2 et DVB-NGH.

Cette technique est itérative et cherche à annuler à chaque itération un seul des pics de puissance instantanée présents au sein du signal que l'on cherche à transmettre. Pour ce faire, cette technique du gradient représentée sur la **figure 1** construit un « noyau » similaire à une impulsion temporelle, appelé par la suite « kernel », à partir de l'ensemble des porteuses réservées, et déplace ce kernel dans le domaine temporel de sorte qu'il ait la même localisation temporelle que le pic de puissance qu'il vise à réduire.

Cependant l'efficacité d'une telle technique est limitée par sa convergence qui est lente et difficilement prédictible ou contrôlable. En effet, certaines itérations peuvent avoir un effet plus destructeur que positif sur la réduction effective du PAPR.

En outre, cette technique ne permet pas un contrôle optimal de la puissance transmise sur chaque porteuse réservée si bien que cette méthode itérative peut-être interrompue avant même de converger lorsque la puissance transmise sur une des porteuses réservée dépasse une valeur maximale autorisée. En effet, selon les normes DVB-T2 et DVB-NGH la puissance transmise sur les porteuses réservées ne peut notamment pas excéder de plus de 10 dB la puissance transmise sur les porteuses portant des données d'informations utiles.

Au regard de cet aspect, une variante de cette méthode a été proposée dans le document « Performance and Implementation Evaluation of TR PAPR Reductions Methods for DVB-T2» par M. Mroué et al., International Journal of Digital Multimedia Broadcasting, Vol.2010, Article ID 797393, 10 pages http://dx.doi.org/10.1155/2010/797393.

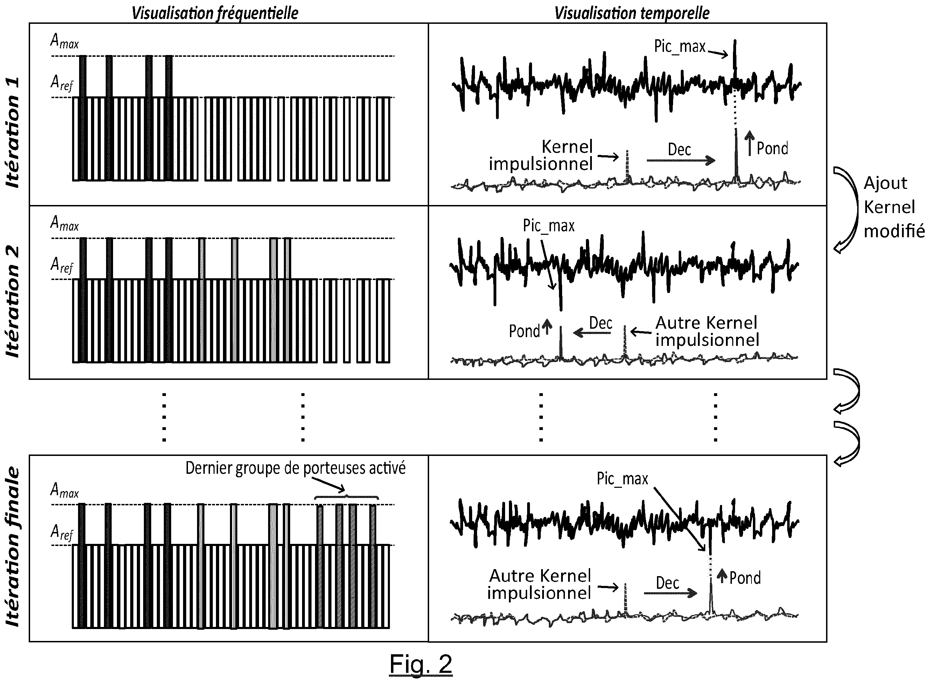

Selon cette variante appelée TR-OKOP (de l'anglais « *Tone Reservation One Kernel One Peak* ») et illustrée par la **figure 2,** les porteuses réservées sont réparties en groupes. A partir des seules porteuses réservées d'un même groupe, un kernel similaire à une impulsion temporelle (de l'anglais « *impulse-like kernel* »), tel que représenté sur la **figure 2,** est généré afin de réduire au cours d'une itération un seul des pics de puissance instantanée en une position temporelle très localisée.

Cette technique permet donc de limiter le nombre d'itérations au nombre de groupes de porteuses mis en oeuvre tout en contrôlant à chaque itération la puissance moyenne transmise sur l'ensemble des porteuses réservées du groupe considéré.

Cependant, tout comme la méthode du gradient mise en oeuvre selon DVB-T2, l'efficacité d'une telle technique est limitée. En effet, ces techniques ne permettent que de réduire un pic de puissance à chaque itération, certaines itérations pouvant avoir un effet réducteur du pic de puissance visé mais néfaste au regard de pics précédemment réduits.

Par ailleurs, la solution TR-OKOP permet certes le contrôle de la puissance transmise à un groupe de porteuses sans pour autant permettre une optimisation précise de la puissance transmise à chaque porteuse.

Dans ce contexte particulier, les inventeurs ont donc identifié un besoin pour une nouvelle technique permettant d'améliorer la réduction du PAPR tout en limitant la complexité de mise en oeuvre. Le document CN104144140 divulgue la réduction du rapport puissance crête à puissance moyenne d'un signal multiporteuse. Des échantillons d'un signal temporel au dessus d'un seuil sont détectés. Le signal envoyé sur une sous-porteuse et des échantillons associés avec cette sous-porteuse sont calculés et ajoutés à des échantillons du signal multiporteuse. La phase des échantillons temporel de la sous-porteuse est changée pour maximiser la réduction d'une crête. Cette procédure est répétée utilisant des autres sous-porteuses.

**3. Exposé de l'invention**

L'invention propose une solution nouvelle qui ne présente pas l'ensemble de ces inconvénients de l'art antérieur, sous la forme d'un procédé de transmission d'un signal source multiporteuse, comprenant des symboles constitués d'un ensemble de porteuses, destinées à être émises simultanément et comprenant des porteuses réservées à au moins un traitement de réduction du rapport puissance crête à puissance moyenne dudit signal source, et des porteuses de données,
ledit procédé comprenant les étapes suivantes :

- génération d'un signal additionnel et addition audit signal source dudit signal additionnel, délivrant un signal optimisé présentant un rapport puissance crête à puissance moyenne inférieur au rapport puissance crête à puissance moyenne dudit signal source,
- transmission dudit signal optimisé,

Selon l'invention, ladite étape de génération et d'addition d'un signal additionnel comprend, pour chaque symbole dudit signal source, une étape d'obtention de M échantillons temporels représentatifs dudit symbole, et au moins une itération des étapes suivantes:

- détection de P échantillons temporels parmi lesdits M échantillons temporels représentatifs dudit symbole, lesdits P échantillons étant les P échantillons d'amplitude les plus élevées parmi lesdits M échantillons, ou lesdits P échantillons présentant une puissance supérieure à un seuil prédéterminé,
- dans le domaine fréquentiel, activation d'au moins une desdites porteuses réservées dudit symbole, par ajout d'une puissance prédéterminée sur ladite au moins une desdites porteuses réservées,
- pour chaque porteuse réservée activée :

    ◦ obtention de M échantillons temporels représentatifs de ladite porteuse réservée activée,
    ◦ application d'un déphasage tenant compte desdits P échantillons détectés, auxdits M échantillons temporels représentatifs de ladite porteuse réservée activée, délivrant M échantillons temporels représentatifs d'un signal additionnel associé à ladite porteuse réservée activée,
    ◦ addition des M échantillons temporels représentatifs dudit signal additionnel associé à ladite porteuse réservée activée auxdits M échantillons temporels représentatifs dudit symbole, délivrant M échantillons temporels représentatifs dudit symbole à utiliser pour l'étape de détection de l'itération suivante.

L'invention propose ainsi une nouvelle technique de transmission d'un signal, visant à améliorer la technique de réservation de porteuse appelée communément « technique TR » (de l'anglais « *Tone Reservation* »), l'emplacement dans l'espace temps-fréquence des porteuses réservées étant connus du ou des récepteurs. En effet, contrairement aux techniques TR de l'art antérieur visant à ne réduire que l'amplitude d'un seul pic par itération, la présente invention propose de réduire plus efficacement le rapport puissance crête à puissance moyenne (PAPR, pour « *Peak to Average Power Ratio* » en anglais) en réduisant plusieurs pics d'amplitude à la fois à chaque itération.

De même que les autres techniques TR de l'art antérieur, la présente invention ne nécessite aucune mise en oeuvre particulière côté récepteur. En effet, le récepteur ne traite que les porteuses de données et ignore les porteuses réservées dont il a simplement à connaître l'emplacement dans l'espace temps-fréquence, lequel est généralement précisé dans une grille fréquentielle de la norme de transmission mise en oeuvre.

Dans le cas particulier, où une seule porteuse réservée est activée par itération, cette approche peut être qualifiée par l'expression « une porteuse réservée activée pour réduire une pluralité de pics simultanément » et a été baptisée « TR Solo » par les inventeurs ou encore « ICMP » (de l'anglais « *Individual Carrier allocation for Multiple peaks* »).

Pour cela, la présente invention met tout d'abord en oeuvre une étape de détection de la pluralité pics d'amplitude à réduire parmi les échantillons temporels représentatifs du symbole considéré. Il est à noter que l'on considère l'amplitude en valeur absolue de ces pics.

Selon une première alternative, pour un symbole donné, ces pics correspondent aux P échantillons temporels d'amplitude les plus élevées parmi M échantillons temporels représentatifs de ce symbole. Dans ce premier cas, la présente invention cherche à réduire un nombre identique de pics pour chaque symbole, ce nombre P étant prédéterminé, par exemple par un opérateur.

Selon une deuxième alternative, ces pics sont les P échantillons présentant une puissance supérieure à un seuil prédéterminé. Dans ce deuxième cas, le nombre de pics à réduire peut donc varier d'un symbole à l'autre.

En fonction des besoins de l'opérateur ou des scénarii de transmission, une valeur optimale du nombre P dans le cas de la première alternative, ou une valeur optimale du seuil dans le cas de la deuxième alternative, sont déterminés de sorte à obtenir les performances désirées. Par exemple, lorsque l'on considère le mode 32k introduit dans la norme DVB-T2 où N=288 porteuses réservées, un nombre P de l'ordre de 100 (par exemple compris en 90 et 110) permet d'atteindre les performances de transmission désirées.

Puis, dans le domaine fréquentiel, l'activation d'au moins une desdites porteuses réservées dudit symbole, par ajout d'une puissance prédéterminée sur ladite au moins une desdites porteuses réservées est mise en oeuvre.

Par exemple, si l'on considère la norme DVB-T2, cette puissance prédéterminée ajoutée ne pourra excéder 10dB. Afin de limiter la puissance consommée lors de la mise en oeuvre du procédé selon l'invention, cette puissance ajoutée sera par exemple de l'ordre de 5dB ou pourra être optimisée individuellement pour chaque porteuse réservée activée à chaque itération.

Ainsi, la présente invention permet à la fois une réduction d'une pluralité de pics d'amplitude d'un symbole par itération et une parfaite maitrise de la puissance ajoutée sur chaque porteuse réservée, ce qui n'est pas le cas selon les solutions de l'art antérieur.

Puis, pour chaque porteuse réservée activée, M échantillons temporels représentatifs de ladite porteuse réservée activée sont obtenus. En d'autres termes, l'obtention, pour chaque porteuse réservée activée, de ces M échantillons temporels représentatifs de ladite porteuse réservée activée est simple et rapide à calculer (au moyen d'une simple exponentielle) car elle revient à supposer que toutes les autres porteuses sont mises à zéro et que l'on ajoute une puissance prédéterminée sur une seule des porteuses réservée à chaque itération.

En outre, la présente invention met en oeuvre l'application d'un déphasage tenant compte desdits P échantillons détectés, auxdits M échantillons temporels représentatifs de ladite porteuse réservée activée, délivrant M échantillons temporels représentatifs d'un signal additionnel associé à ladite porteuse réservée activée.

En d'autres termes, cette étape vise, au moyen d'un déphasage optimisé, à ce que les valeurs d'amplitudes prises par le peigne d'impulsions temporelles aux positions des P pics détectés permettent de réduire (globalement) les valeurs d'amplitude prises par l'ensemble de ces P pics, le peigne d'impulsions temporelles correspondant à l'activation, sous la forme d'une impulsion en fréquence, de chaque porteuse réservée activée.,

Une fois ce déphasage obtenu, les M échantillons temporels représentatifs dudit signal additionnel associé à ladite porteuse réservée activée sont additionnés auxdits M échantillons temporels représentatifs dudit symbole, délivrant M échantillons temporels représentatifs dudit symbole à utiliser pour l'étape de détection de l'itération suivante.

Il est à noter que selon la présente invention « l'addition » peut valoir addition et/ou retranchement de sorte à obtenir un signal optimisé dont la valeur absolue des pics est inférieure au regard dudit signal source.

La présente invention utilise donc au moins une impulsion de fréquence par itération pour réduire plusieurs pics d'amplitude temporels répartis sur un symbole OFDM entier, une telle impulsion de fréquence revenant à un peigne d'impulsions temporelles. Au contraire, les techniques TR de l'art antérieur produisent un kernel temporel proche d'une impulsion qui ne peut réduire qu'un pic à la fois et non une pluralité de pics simultanément.

Il est à noter que pour chaque itération, les trois étapes d'obtention, d'application et d'addition sont respectivement mises en oeuvre pour chaque porteuse réservée activée.

Selon un aspect particulier de la présente invention, chaque porteuse réservée est activée une unique fois au cours de ladite étape de génération d'un signal additionnel.

Ainsi, le nombre d'itérations est limité et inférieur ou égal au nombre de porteuses réservées pour la réduction du PAPR, ce qui permet un meilleur contrôle de la réduction du PAPR au regard des procédés de l'art antérieur pour lesquels la convergence est très difficilement prédictible ou contrôlable.

Par ailleurs, une telle utilisation de chaque porteuse réservée pour agir sur une pluralité de pics permet de limiter le fait que certaines itérations aient un effet plus destructif que positif sur l'évolution du PAPR. En effet, la présente invention permet une réduction plus continue du PAPR au cours de chaque itération du fait que l'on réduit plusieurs pics simultanément.

Selon un mode de réalisation du procédé de transmission, ledit déphasage tient compte à la fois de l'amplitude desdits P échantillons détectés, et de l'amplitude de P échantillons, de même position que lesdits P échantillons détectés, appartenant auxdits M échantillons temporels représentatifs de ladite au moins une porteuse réservée activée.

Il est à noter que l'on considère l'amplitude en valeur absolue que ce soit pour les P pics des M échantillons temporels représentatifs dudit symbole.

Selon un aspect particulier de ce mode de réalisation, ledit déphasage est défini par l'équation suivante dans le domaine temporel discret :

$$\phi = \frac{3\pi}{2} + \arctan\left(\frac{\sum_{v \in maxPos} Re(x[v]).Re(c[v]) + Im(x[v]).Im(c[v])}{\sum_{v \in maxPos} Im(x[v]).Re(c[v]) - Re(x[v]).Im(c[v])}\right)$$

avec :

x ledit signal source,
maxPos l'ensemble des positions desdits P échantillons détectés et $v$ l'une desdites positions, c le signal représentatif de ladite porteuse réservée activée.

Selon un autre mode de réalisation du procédé de transmission, au moins deux porteuses réservées dudit symbole sont activées simultanément.

Ce mode de réalisation vise à activer plusieurs porteuses réservées à la fois. En d'autres termes, si l'on considère N porteuses réservées par symbole à transmettre, les N porteuses réservées sont alors réparties en G groupes de A porteuses tel que N=G.A, avec $A \geq 2$ et $G < N$.

Pour autant, il est à noter que les trois étapes d'obtention, d'application, addition sont respectivement mises en oeuvre pour chaque porteuse réservée activée durant l'itération considérée. Autrement dit, on effectue de manière « groupée » l'approche « TR Solo » où une seule porteuse réservée est activée par itération (i.e. $A = 1$ et $G = N$), c'est pourquoi ce mode de réalisation a été baptisé « TR Solo Groupées » par les inventeurs ou encore « GICMP » (de l'anglais « Group of Individual Carrier allocation for Multiple peaks »).

Le nombre d'itération est donc égal au nombre de groupes G et donc inférieur au nombre N de porteuses réservées, ce qui permet de réduire le temps de mise en oeuvre du procédé selon l'invention, notamment lorsque l'on considère le mode 32k introduit dans la norme DVB-T2 où N=288 porteuses réservées.

Selon un aspect particulier de ce mode de réalisation, une étape de détermination de déphasage est mise en oeuvre pour chacune desdites au moins deux porteuses réservées activées simultanément.

En d'autres termes, selon cet aspect particulier, pour chaque porteuse réservée activée durant l'itération considérée une étape de détermination du déphasage est mise en oeuvre, il y a donc autant d'étapes de détermination de déphasage que le nombre A de porteuses activées par itération.

Selon un autre aspect particulier de ce mode de réalisation, une seule étape de détermination dudit déphasage est mise en oeuvre pour lesdites au moins deux porteuses réservées activées simultanément,
ladite étape de détermination dudit déphasage étant précédée d'une étape d'addition des M échantillons temporels obtenus respectivement pour chacune desdites au moins deux porteuses réservées activées simultanément.

En d'autres termes, selon cet aspect particulier, les trois étapes d'obtention, d'application et d'addition sont respectivement mises en oeuvre pour chaque porteuse réservée activée, toutefois une même valeur de déphasage est appliquée à chacune.

Cet aspect particulier est certes moins précis en terme de correction, toutefois il permet de réduire la complexité liée à la mise en oeuvre d'une détermination de déphasage par porteuse réservée activée.

L'invention concerne également un dispositif de transmission d'un signal source multiporteuse, comprenant des symboles constitués d'un ensemble de porteuses, destinées à être émises simultanément et comprenant des porteuses réservées à au moins un traitement de réduction du rapport puissance crête à puissance moyenne dudit signal source, et des porteuses de données, ledit dispositif comprenant :

- un module de génération d'un signal additionnel et d'addition audit signal source dudit signal additionnel, délivrant un signal optimisé présentant un rapport puissance crête à puissance moyenne inférieur au rapport puissance crête à puissance moyenne dudit signal source,
- un module de transmission dudit signal optimisé,

Ledit module de génération et d'addition d'un signal additionnel est remarquable en ce qu'il comprend, pour chaque symbole dudit signal source, une entité d'obtention de M échantillons temporels représentatifs dudit symbole, et comprend en outre :

- une entité de détection de P échantillons temporels parmi lesdits M échantillons temporels représentatifs dudit symbole, lesdits P échantillons étant les P échantillons d'amplitude les plus élevées parmi lesdits M échantillons, ou lesdits P échantillons présentant une puissance supérieure à un seuil prédéterminé,
- une entité d'activation d'au moins une desdites porteuses réservées dudit symbole, par ajout d'une puissance prédéterminée sur ladite au moins une desdites porteuses réservées,
- pour chaque porteuse réservée activée :

◦ une entité d'obtention de M échantillons temporels représentatifs de ladite porteuse réservée activée,
◦ une entité d'application d'un déphasage tenant compte desdits P échantillons détectés, auxdits M échantillons temporels représentatifs de ladite porteuse réservée activée, délivrant M échantillons temporels représentatifs d'un signal additionnel associé à ladite porteuse réservée activée,
◦ une entité d'addition des M échantillons temporels représentatifs dudit signal additionnel associé à ladite porteuse réservée activée auxdits M échantillons temporels représentatifs dudit symbole, délivrant M échantillons temporels représentatifs dudit symbole à utiliser pour l'étape de détection de l'itération suivante.

Un tel dispositif est notamment adapté pour mettre en oeuvre le procédé de transmission tel que décrit précédemment, les entités du module de génération d'un signal additionnel étant mises en oeuvre à chaque itération de ce procédé.

Ce dispositif pourra bien sûr comporter les différentes caractéristiques relatives au procédé de transmission, telles que décrites précédemment qui peuvent être combinées ou prises isolément. Ainsi, les caractéristiques et avantages de ce dispositif de transmission sont les mêmes que ceux du procédé de transmission décrit précédemment. Par conséquent, ils ne sont pas détaillés plus amplement.

Un autre aspect de l'invention concerne également un signal représentatif d'un signal transmis selon le procédé de transmission décrit précédemment. Un tel signal peut être transmis et/ou stocké sur un support de données.

Ce signal pourra bien sûr comporter les différentes caractéristiques relatives au procédé de transmission selon l'invention.

Selon une implémentation, les différentes étapes du procédé de transmission tel que décrit précédemment sont mises en oeuvre par un ou plusieurs logiciels ou programmes de module logiciel, comprenant des instructions logicielles destinées à être exécutées par un processeur de données d'un dispositif de transmission conçu pour commander l'exécution des différentes étapes du procédé selon l'invention.

En conséquence, l'invention vise aussi un programme d'ordinateur, susceptible d'être exécuté par un ordinateur ou par un processeur de données, ce programme comportant des instructions pour commander l'exécution des étapes d'un procédé de transmission tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique (clé USB, SSD), ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, les termes "module" ou « entité » peuvent correspondre dans ce document aussi bien à un composant logiciel, qu'à un composant matériel ou à un ensemble de composants matériels et logiciels.

Un composant logiciel correspond à un ou plusieurs programmes de module logiciel, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des figures annexées, parmi lesquels :

- les figures 1 et 2 déjà décrites en relation avec l'art antérieur, illustre des techniques TR de réduction du PAPR,
- la figure 3 présente les principales étapes du procédé de transmission selon l'invention,
- les figures 4 et 5 illustrent respectivement un procédé et un dispositif selon un premier mode de réalisation de l'invention, baptisé « TR Solo »,
- les figures 6 et 7 illustrent respectivement un procédé et un dispositif selon une première variante d'un deuxième mode de réalisation de l'invention, baptisé « TR Solo Groupées»,
- les figures 8 et 9 illustrent respectivement un procédé et un dispositif selon une deuxième variante d'un deuxième mode de réalisation de l'invention, baptisé « TR Solo Groupées».

**5. Description d'un mode de réalisation de l'invention**

*5.1 Principe Général*

Le principe général de l'invention repose sur l'activation d'au moins une porteuse réservée par itération, en lui ajoutant un niveau prédéterminé de puissance au regard des porteuses de données.

Une telle activation, correspondant à une impulsion fréquentielle, génère un peigne d'impulsions dans le domaine temporel de sorte à réduire simultanément une pluralité de pics de puissance d'un symbole du signal à transmettre.

Pour ce faire, un déphasage tenant compte de ces pics de puissance est appliqué au peigne d'impulsions créé. Un tel déphasage permet, lors d'une étape d'addition (i.e. de retranchement) de faire coïncider en position le peigne d'impulsions réductrices d'amplitudes et la pluralité de pics de puissance du symbole du signal à transmettre.

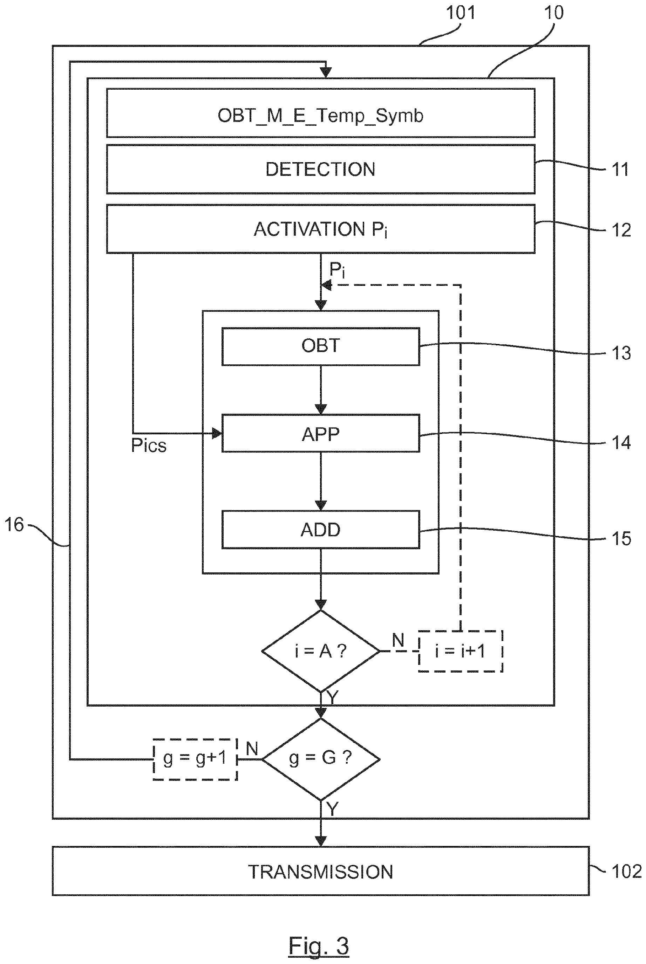

On décrit ci-après en relation avec la **figure 3,** les étapes générales du procédé de transmission selon l'invention.

Le procédé selon l'invention comprend principalement les étapes suivantes :

- génération 101 d'un signal additionnel, et addition audit signal source dudit signal additionnel, délivrant un signal optimisé présentant un rapport puissance crête à puissance moyenne inférieur au rapport puissance crête à puissance moyenne dudit signal source,
- transmission 102 dudit signal optimisé,

En particulier, ladite étape de génération et d'addition (101) d'un signal additionnel comprend, pour chaque symbole dudit signal source, une étape d'obtention (10) de M échantillons temporels représentatifs dudit symbole, et au moins une itération (16) des étapes suivantes:

- détection (11) de P échantillons temporels parmi lesdits M échantillons temporels représentatifs dudit symbole, lesdits P échantillons étant les P échantillons d'amplitude les plus élevées parmi lesdits M échantillons, ou lesdits P échantillons présentant une puissance supérieure à un seuil prédéterminé,
- dans le domaine fréquentiel, activation (12) d'au moins une desdites porteuses réservées dudit symbole, par ajout d'une puissance prédéterminée sur ladite au moins une desdites porteuses réservées,
- pour chaque porteuse réservée activée par itération (16):

  ∘ obtention (13) de M échantillons temporels représentatifs de ladite porteuse réservée activée,
  ∘ application (14) d'un déphasage tenant compte desdits P échantillons détectés, auxdits M échantillons temporels représentatifs de ladite porteuse réservée activée, délivrant M échantillons temporels représentatifs d'un signal additionnel associé à ladite porteuse réservée activée,
  ∘ addition (15) des M échantillons temporels représentatifs dudit signal additionnel associé à ladite porteuse réservée activée auxdits M échantillons temporels représentatifs dudit symbole, délivrant M échantillons temporels représentatifs dudit symbole à utiliser pour l'étape de détection de l'itération suivante.

Chacune de ces étapes principales est détaillée ci-après pour différents modes de réalisation de la présente invention.

*5.2 Description d'un premier mode de réalisation selon l'invention*

On présente en relation avec les figures 3 à 5 un premier mode de réalisation de l'invention baptisé « TR Solo » par les inventeurs ou encore « ICMP » (de l'anglais « *Individual Carrier allocation for Multiple peaks* »).

Ce premier mode de réalisation correspond au cas particulier, où une seule porteuse réservée est activée par itération, la porteuse réservée activée diffèrent d'une itération à l'autre de sorte qu'une porteuse réservée est activée une unique fois par symbole lors de la mise en oeuvre du procédé de transmission selon l'invention.

En d'autres termes $G = N$ groupes de $A = 1$ porteuse sont traités pour un symbole à transmettre selon le procédé de transmission de la présente invention.

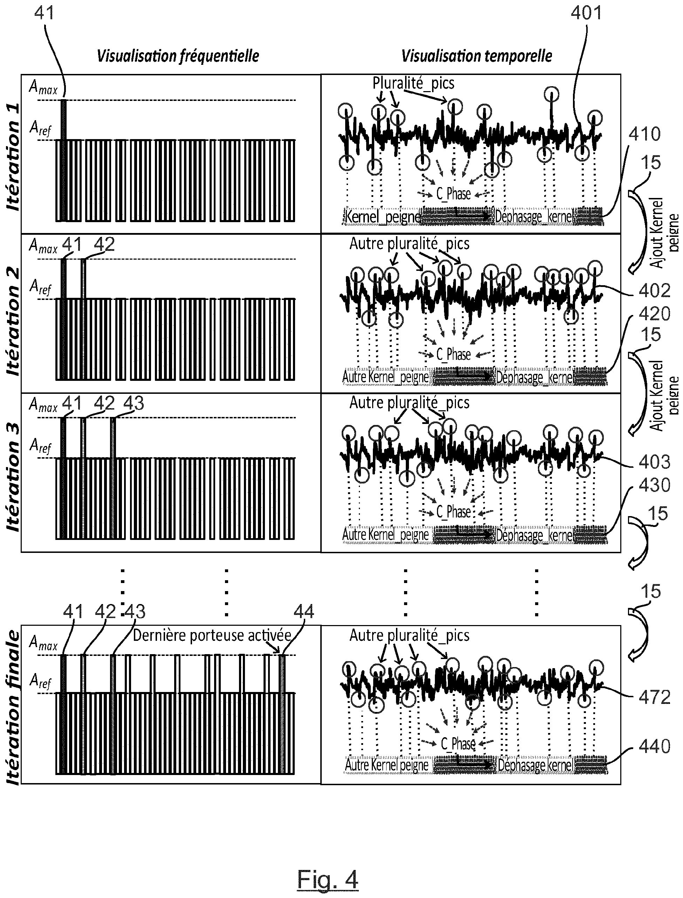

Les visualisation fréquentielle (à gauche) et temporelle (à droite) des 3 premières itérations (g=1, 2 et 3) et de la N$^{ième}$ itération de ce premier mode de réalisation sont représentées sur **la figure 4.**

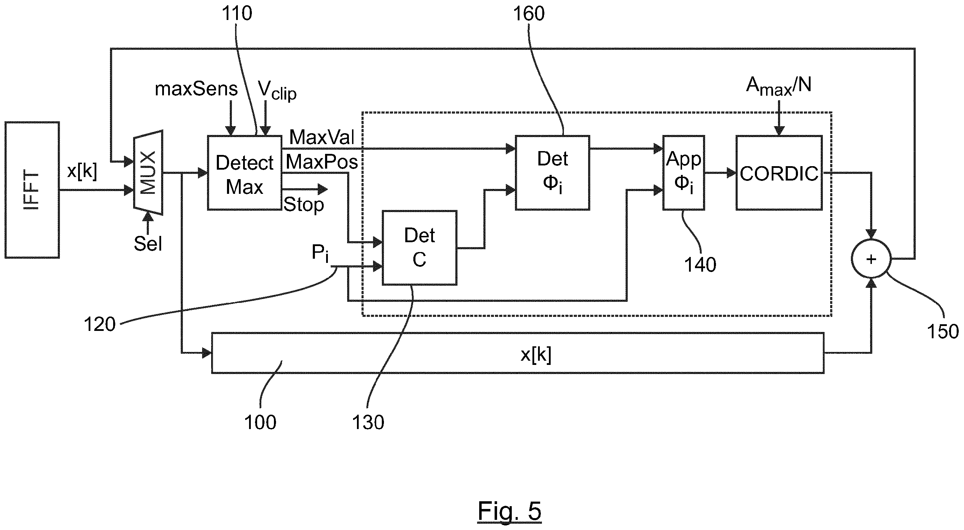

Pour un symbole donné à transmettre, les M échantillons temporels (401) représentatifs du symbole sont tout d'abord obtenus 10 et mémorisés, par exemple dans une mémoire tampon (en anglais « *buffer* ») d'une entité d'obtention 100 telle que représentée sur la **figure 5** illustrant le dispositif mettant en oeuvre une itération de ce premier mode de réalisation du procédé de transmission selon l'invention, dont les modules et entités sont pilotés par un processeur (non représenté) d'une unité de traitement (non représentée), elle même pilotée par un programme d'ordinateur (non représenté) stocké dans une mémoire (non représentée) et mettant e oeuvre le procédé de transmission selon l'invention.

Ces échantillons temporels (401) sont par exemple directement fournis par un opérateur, ou préalablement mémorisés, ou encore issus de la mise en oeuvre d'une transformée de Fourier rapide inverse (IFFT de l'anglais « *Inverse Fast Fourier Transform »,* l'opérateur IFFT étant multiplexé temporellement avec les autres entités (100 à 160) du module de génération et d'addition d'un signal additionnel réducteur de PAPR selon l'invention.

Puis, lors de la première itération d'index g=1, parmi ces M échantillons temporels (401) représentatifs du symbole considéré, les P échantillons d'amplitude les plus élevées (leur nombre est notamment défini par le paramètre *maxSens*), ou les P échantillons présentant une puissance supérieure à un seuil prédéterminé *Vclip* (le nombre de pics à réduire pouvant dans ce cas donc varier d'un symbole à l'autre) sont détectés 11 par l'entité de détection 110 telle que représentée sur la **figure 5.**

Ces P échantillons correspondent à la pluralité de pics encerclés sur la visualisation temporelle de la première itération.

Lors de la première itération de ce premier mode de réalisation, la première porteuse $P_g$ (avec g=1) réservée 41 est activée (12) par ajout d'une puissance prédéterminée définie par un opérateur. Par exemple, cette puissance est plus élevée de $A_{max} = 5$ *dB* au regard de la puissance $A_{ref}$ des porteuses de données.

L'activation 12 de cette porteuse revient à la mise en oeuvre d'une impulsion fréquentielle. Les M échantillons temporels 410 représentatifs de cette porteuse 41 réservée activée, sont obtenus (13), par l'entité d'obtention 130 de la **figure** 5, en supposant que toutes les autres porteuses sont mises à zéro, et prend la forme d'un peigne d'impulsions qui diffère du kernel similaire à une seule impulsion temporelle, mis en oeuvre selon les techniques TR de l'art antérieur telles qu'illustrées par les **figures 1 et 2.**

Une telle entité d'obtention 130 est notamment composée d'au moins un multiplieur et d'un outil CORDIC permettant une transformation de coordonnées polaires en coordonnées cartésiennes en appliquant le cas échéant un « modulo $\pi$».

Puis, ce peigne d'impulsions 410 est déphasé (14) de sorte à coïncider en position et en amplitude inversée (i.e. en opposition avec l'amplitude de chaque pic) avec les pics précédemment détectés 11 parmi les M échantillons temporels 401.

Pour ce faire un déphasage est déterminé, par l'entité de détermination 160 de la **figure** 5, de la manière suivante :

$$\phi_{g=1} = \frac{3\pi}{2} + \arctan\left(\frac{\sum_{v\in maxPos} Re\big(x_{g=1}[v]\big).Re\big(c_{g=1}[v]\big) + Im\big(x_{g=1}[v]\big).Im\big(c_{g=1}[v]\big)}{\sum_{v\in maxPos} Im\big(x_{g=1}[v]\big).Re\big(c_{g=1}[v]\big) - Re\big(x_{g=1}[v]\big).Im\big(c_{g=1}[v]\big)}\right)$$

avec :

$x_{g=1}$ un vecteur temporel comprenant les M échantillons représentatifs du symbole lors de la première itération (g=1), *maxPos* l'ensemble des positions des P échantillons détectés et *v* l'une desdites positions lors de la première itération (g=1),

$c_{g=1}$ un vecteur temporel comprenant les M échantillons représentatifs de ladite porteuse réservée activée lors de la première itération (g=1) tel que :

$$c_{g=1}[k] = \frac{A_{max}}{M}.e^{j\frac{2\pi.P_{g=1}.k}{M}}, k\epsilon[0, M-1]$$

avec :
$P_{g=1}$ la position de la porteuse réservée activée lors de cette première itération.

Une telle entité de détermination 160 est notamment composée de quatre multiplieurs et de deux additionneurs/soustracteurs.

Un tel déphasage tient donc compte à la fois de l'amplitude des P échantillons détectés x[v] parmi les M échantillons temporels (401) représentatifs du symbole considérés, et de l'amplitude de P échantillons c[v], de même position (*v* parmi l'une des position *maxPos)* appartenant aux M échantillons temporels 410 représentatifs de la porteuse réservée activée 41.

L'application (14) du déphasage au peigne d'impulsions est tel que :

$$c_{g=1}[k]_d = \frac{A_{max}}{M} . e^{-j\phi_{g=1}} . e^{j\frac{2\pi.P_{g=1}.k}{M}}, k\epsilon[0, M-1],$$

Une fois ce peigne d'impulsion 410 déphasé (également nommé « kernel peigne » déphasé), il est ajouté, par l'entité d'addition 150 de **la figure 5**, aux M échantillons temporels 401 représentatifs du symbole considéré, délivrant M nouveaux échantillons temporels $x_{g=2}[k]$ 402 représentatifs du symbole à utiliser pour l'étape de détection 11 de la deuxième itération tels que :

$$x_{g=2}[k] = x_{g=1}[k] + c_{g=1}[k]_d$$

Lors de la deuxième itération d'index g=2, parmi ces M nouveaux échantillons temporels $x_{g=2}[k]$ 402, P pics sont détectés 11 tels qu'encerclés sur la visualisation temporelle de la deuxième itération.

Il peut être noté que les amplitudes de ces pics et leur position ont évolué au regard de la première itération.

La deuxième porteuse $P_{g=2}$ réservée 42 est alors activée (12) (la première porteuse activée reste représentée afin de considérer qu'elle a déjà été activée), les M échantillons temporels 420 représentatifs de cette porteuse 42 réservée activée sont obtenus en supposant que toutes les autres porteuses sont mises à zéro, et prend donc la forme d'un peigne d'impulsions 420 différent du peigne d'impulsion 410 obtenu lors de la première itération.

De la même, manière que pour la première itération un déphasage est appliqué à ce peigne d'impulsion 420 de sorte à coïncider en position et en amplitude inversée (i.e. en opposition avec l'amplitude de chaque pic) avec les pics précédemment détectés 11 parmi les nouveaux échantillons temporels 402.

Ce déphasage est déterminé de manière similaire à la première itération, à savoir de la manière suivante :

$$\phi_{g=2} = \frac{3\pi}{2} + \arctan\left(\frac{\sum_{v \in maxPos} Re(x_{g=2}[v]).Re(c_{g=2}[v]) + Im(x_{g=2}[v]).Im(c_{g=2}[v])}{\sum_{v \in maxPos} Im(x_{g=2}[v]).Re(c_{g=2}[v]) - Re(x_{g=2}[v]).Im(c_{g=2}[v])}\right)$$

avec :

$x_{g=2}$ un vecteur temporel comprenant les M échantillons représentatifs du symbole lors de la deuxième itération (g=2),
*maxPos* l'ensemble des positions des P échantillons détectés et *v* l'une desdites positions lors de la deuxième itération (g=2),
$c_{g=2}$ un vecteur temporel comprenant les M échantillons représentatifs de ladite porteuse réservée activée lors de la deuxième itération (g=2).

Une fois ce peigne d'impulsion 420 déphasé (également nommé « kernel peigne » déphasé), il est à son tour ajouté (15), aux M échantillons temporels 402 représentatifs du symbole issus de la première itération, délivrant M nouveaux échantillons temporels 403 représentatifs du symbole tels que :

$$x_{g=3}[k] = x_{g=2}[k] + c_{g=2}[k]_d$$

à utiliser pour l'étape de détection 11 de la troisième itération, et ainsi de suite... jusqu'à la dernière porteuse réservée 44 qui n'a pas encore été activée.

Lors de cette dernière itération d'index g=N (par exemple N=72 pour le mode 8K des normes DVB-T2 et DVB-NGH), parmi ces M nouveaux échantillons temporels $x_{g=N}[k]$ 472, P pics sont détectés 11 tels qu'encerclés sur la visualisation temporelle de la dernière itération.

Il peut être noté que les amplitudes de ces pics et leur position ont également évolué au regard de la première itération, l'amplitude des pics a notamment été réduite au cours.

La dernière porteuse $P_g$ (avec g=N=72 par exemple) réservée 44 est alors activée (12), les M échantillons temporels 440 représentatifs de cette porteuse 44 réservée activée sont obtenus en supposant que toutes les autres porteuses sont mises à zéro, et prend donc la forme d'un peigne d'impulsions 440 différent du peigne d'impulsion 410 obtenu lors de la première itération.

De la même, manière que pour la première itération un déphasage est appliqué à ce peigne d'impulsion 440 de sorte à coïncider en position et en amplitude inversée (i.e. en opposition avec l'amplitude de chaque pic) avec les pics précédemment détectés 11 parmi les échantillons temporels 472 issu de l'avant dernière itération.

Une fois ce peigne d'impulsion 440 déphasé (également nommé « kernel peigne » déphasé), il est à son tour ajouté (15), aux M échantillons temporels 472 représentatifs du symbole issus de l'avant dernière itération, délivrant M nouveaux échantillons temporels (non représentés) à transmettre.

Selon ce mode de réalisation, il y aura donc autant d'itérations qu'il n'y a de porteuses réservées.

Ainsi, si l'on considère les modes 2K (18 porteuses réservées), 4K (36 porteuses réservées) ou 8K (72 porteuses réservées) des normes DVB-T2 et DVB-NGH, il y aura donc respectivement 18, 36 et 72 itérations ce qui est acceptable en termes de performances.

En revanche, le mode 32K avec 288 porteuses réservées requière 288 itérations ce qui peut conduite à des temps de calculs trop longs et/ou nécessiter des ressources matérielles trop importantes. Le deuxième mode de réalisation, décrit ci-après, est proposé à titre de solution pour ce dernier cas.

*5.3 Description d'un deuxième mode de réalisation selon l'invention*

Selon un deuxième mode de réalisation du procédé de transmission, au moins deux porteuses réservées du symbole considéré sont activées simultanément.

Ce mode de réalisation vise à activer plusieurs porteuses réservées à la fois. En d'autres termes, si l'on considère N porteuses réservées par symbole à transmettre, les N porteuses réservées sont alors réparties en G groupes de A porteuses tel que N=G.A, avec $A \geq 2$ et $G < N$.

Pour autant, il est à noter que les trois étapes d'obtention (13), d'application (14), et d'addition (15) sont respectivement mises en oeuvre pour chaque porteuse activée durant l'itération considérée. Autrement dit, on effectue de manière « groupée » l'approche « TR Solo » où une seule porteuse réservé est activée par itération (i.e. $A = 1$ et $G = N$), c'est pourquoi ce mode de réalisation a été baptisé « TR Solo Groupées » par les inventeurs ou encore « GICMP » (de l'anglais « *Group of Individual Carrier allocation for Multiple peaks* »).

Le nombre d'itérations est donc égal au nombre de groupes G et donc inférieur au nombre N de porteuses réservées, ce qui permet de réduire le temps de mise en oeuvre du procédé selon l'invention, notamment lorsque l'on considère le mode 32k introduit dans la norme DVB-T2 où N=288 porteuses réservées.

*5.3.1 Première variante :*

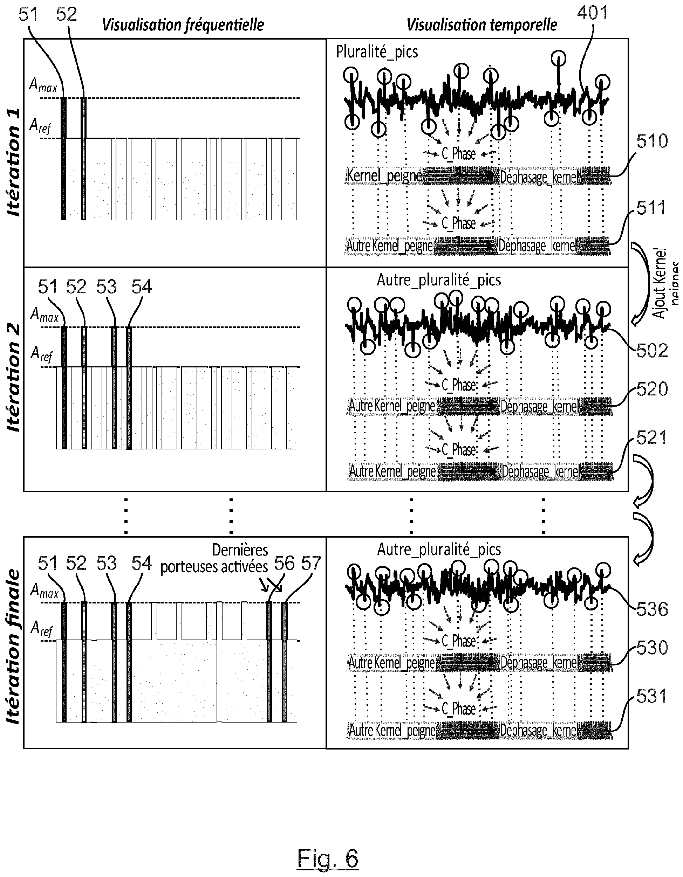

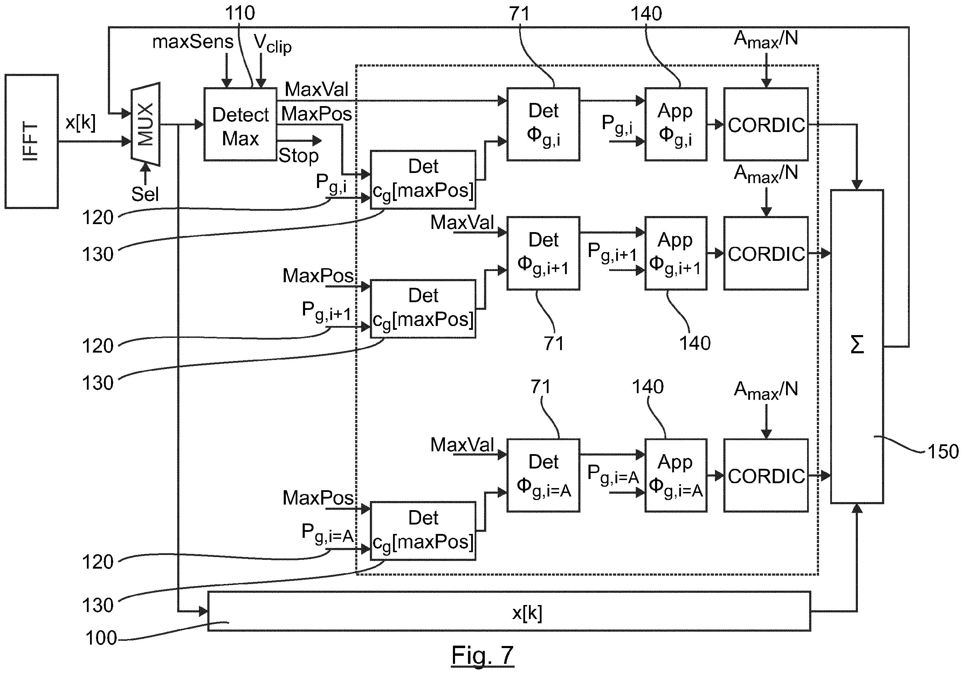

On présente en relation avec les **figures 6 et 7** une première variante de ce deuxième mode de réalisation de l'invention baptisé « TR Solo Groupées » » par les inventeurs.

Selon cette première variante, une étape de détermination (71) de déphasage est mise en oeuvre par l'entité de déphasage représentée sur la **figure 7** illustrant le dispositif correspondant, pour une itération, à cette première variante du deuxième mode de réalisation, dont les modules et entités sont pilotés par un processeur (non représenté) d'une unité de traitement (non représentée), elle même pilotée par un programme d'ordinateur (non représenté) stocké dans une mémoire (non représentée) et mettant e oeuvre le procédé de transmission selon l'invention.

En d'autres termes, selon cet aspect particulier, pour chaque porteuse activée durant l'itération considérée une étape de détermination (71) du déphasage est mise en oeuvre, il y a donc autant d'étapes de détermination (71) de déphasage (et donc d'entité de détermination correspondantes) que le nombre A de porteuses activées par itération.

La **figure 6** illustre notamment le cas où deux porteuses réservées sont activées par itération soit A =2, respectivement les porteuses réservées 51 et 52 pour la première itération, les porteuses 53 et 54 pour la deuxième itération, les porteuses réservées 56 et 57 pour la dernières itération.

Ainsi, si l'on considère le mode 8K avec N=72 porteuses réservées il y aura donc G=36 groupes de deux porteuses activées par itération, et en conséquence 36 itérations seront mises en oeuvre, contre 72 selon le premier mode de réalisation décrit précédemment.

La **figure 7** illustre notamment le cas où plus de trois porteuses réservées sont activées par itération soit A>3, un tel mode de réalisation à 3 ou 6 porteuses activées par itération permettrait notamment de traiter un symbole selon le mode 32k introduit dans la norme DVB-T2 où N=288 porteuses réservées, avec respectivement G=96 ou G=48 itérations, ce qui permet de réduire efficacement le temps de mise en oeuvre du procédé selon l'invention.

De même que pour le premier mode de réalisation, dans ce deuxième mode de réalisation, les M échantillons temporels (401) représentatifs du symbole considérés sont tout d'abord obtenus 10 et mémorisés, et P pics sont détectés 11 tels qu'encerclés sur la visualisation temporelle de la première itération de la **figure 6.**

Lors de la première itération de cette première variante de ce deuxième mode de réalisation, les deux premières porteuses $P_{g=1,i=1}$ et $P_{g=1,i=2}$ réservées 51, 52 sont activées (12) par ajout d'une puissance prédéterminée définie par un opérateur.

Puis, les M échantillons temporels 510 représentatifs de la première porteuse réservée activée 51 et les M échantillons temporels 520 représentatifs de la deuxième porteuse réservée activée 52, sont obtenus (13) en parallèle, par les entités respectives d'obtention 130 de la **figure 7,** en supposant pour chacune de ces porteuses réservées activées, que toutes les autres porteuses sont mises à zéro, et prennent la forme de peignes d'impulsions distincts qui diffère du kernel similaire à une seule impulsion temporelle, mis en oeuvre selon les techniques TR de l'art antérieur telles qu'illustrées par les **figures 1 et 2.**

Puis, ces peignes d'impulsions 510 et 512 sont séparément déphasés en parallèle (14) pour que chacun coïncide en position et en amplitude inversée (i.e. en opposition avec l'amplitude de chaque pic) avec les pics précédemment détectés 11 parmi les M échantillons temporels 401.

Pour ce faire les déphasages respectifs sont déterminés (71) en parallèle de la manière suivante :

$$\phi_{g=1,i=1} = \frac{3\pi}{2} + \arctan\left(\frac{\sum_{v \in maxPos} Re(x_{g=1}[v]).Re(c_{g=1,i=1}[v]) + Im(x_{g=1}[v]).Im(c_{g=1,i=1}[v])}{\sum_{v \in maxPos} Im(x_{g=1}[v]).Re(c_{g=1,i=1}[v]) - Re(x_{g=1}[v]).Im(c_{g=1,i=1}[v])}\right)$$

$$\phi_{g=1,i=2} = \frac{3\pi}{2} + \arctan\left(\frac{\sum_{v \in maxPos} Re(x_{g=1}[v]).Re(c_{g=1,i=2}[v]) + Im(x_{g=1}[v]).Im(c_{g=1,i=2}[v])}{\sum_{v \in maxPos} Im(x_{g=1}[v]).Re(c_{g=1,i=2}[v]) - Re(x_{g=1}[v]).Im(c_{g=1,i=2}[v])}\right)$$

$x_{g=1}$ un vecteur temporel comprenant les M échantillons (401) représentatifs du symbole lors de la première itération (g=1),

*maxPos* l'ensemble des positions des P échantillons détectés et *v* l'une desdites positions lors de la première itération (g=1),

$c_{g=1,i=1}$ un vecteur temporel comprenant les M échantillons (510) représentatifs de ladite première porteuse 51 réservée activée lors de cette première itération (g=1) tel que :

$$c_{g=1,i=1}[k] = \frac{A_{max}}{M}.e^{j\frac{2\pi.P_{g=1,i=1}.k}{M}}, k \in [0, M-1]$$

avec :

$P_{g=1,i=1}$ la position de la première porteuse 51 réservée activée lors de cette première itération,

$c_{g=1,i=2}$ un vecteur temporel comprenant les M échantillons (520) représentatifs de ladite deuxième porteuse 52 réservée activée lors de cette première itération (g=1) tel que :

$$c_{g=1,i=2}[k] = \frac{A_{max}}{M}.e^{j\frac{2\pi.P_{g=1,i=2}.k}{M}}, k \in [0, M-1]$$

avec :

$P_{g=1,i=2}$ la position de la deuxième porteuse 52 réservée activée lors de cette première itération.

Ensuite, les deux peignes 510 et 520 d'impulsions temporelles correspondant à ces deux porteuses activées, sont déphasés (14) en parallèle de la manière suivante :

$$c_{g=1,i=1}[k]_d = \frac{A_{max}}{M}.e^{-j\phi_{g=1,i=1}}.e^{j\frac{2\pi.P_{g=1,i=1}.k}{M}}, k \in [0, M-1],$$

$$c_{g=1,i=2}[k]_d = \frac{A_{max}}{M}.e^{-j\phi_{g=1,i=2}}.e^{j\frac{2\pi.P_{g=1,i=2}.k}{M}}, k \in [0, M-1]$$

Une fois ces peignes d'impulsion déphasés (également nommé « kernel peigne » déphasé), ils sont tous deux ajoutés, par l'entité d'addition 150 de **la figure 7,** aux M échantillons temporels 401 représentatifs du symbole considéré, délivrant M nouveaux échantillons temporels $x_{g=2}[k]$ 502 représentatifs du symbole à utiliser pour l'étape de détection 11 de la deuxième itération tels que :

$$x_{g=2}[k] = x_{g=1}[k] + c_{g=1,i=1}[k]_d + c_{g=1,i=2}[k]_d \text{ ou encore } x_{g=2}[k] = x_{g=1}[k] + \sum_{i \in A} c_{g,i_d},$$

et ainsi de suite... jusqu'au deux dernières porteuses réservées 56 et 57 qui n'ont pas encore été activées.

On peut noter que du fait de l'addition de ces deux peignes 510 et 520 au lieu d'un selon le premier mode de réalisation, la réduction du PAPR est accélérée par itération, en effet l'amplitude des pics M nouveaux échantillons temporels $x_{g=2}[k]$ 502 de la deuxième itération de la figure 6 est réduite au regard de l'amplitude des pics M nouveaux échantillons temporels $x_{g=2}[k]$ 502 de la deuxième itération de la figure 4 du premier mode de réalisation.

*5.3.2 Deuxième variante :*

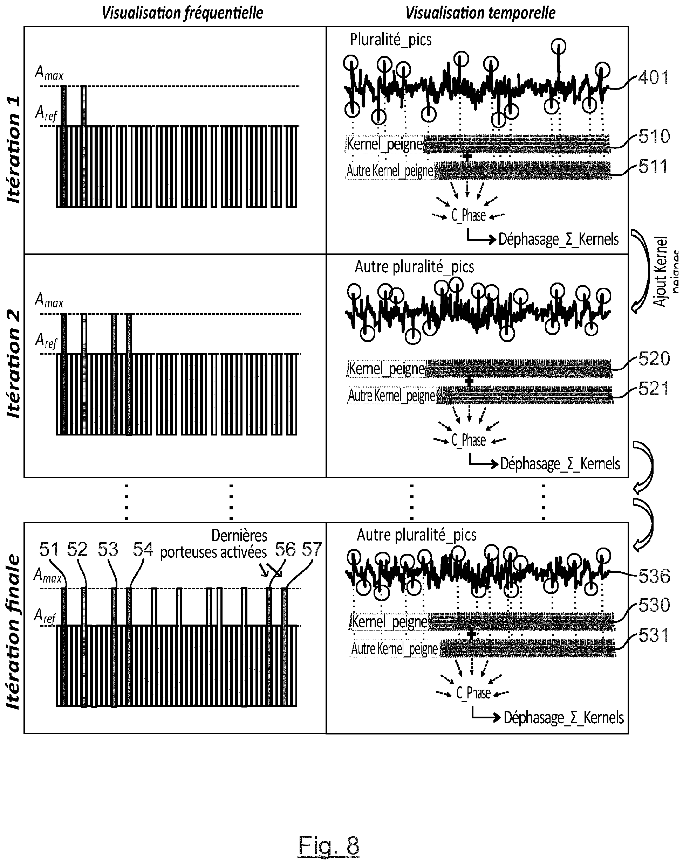

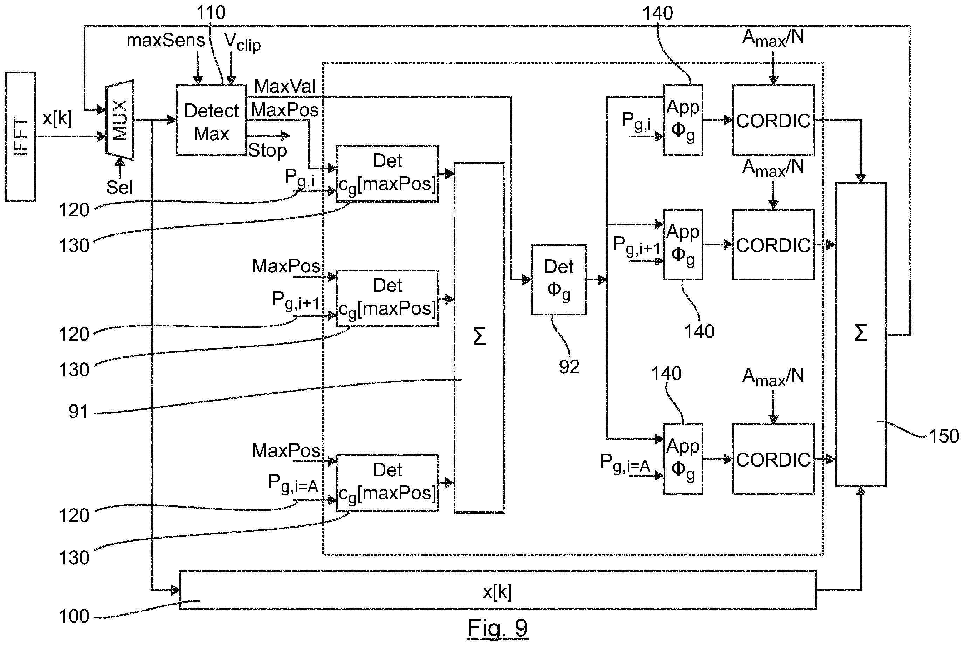

On présente en relation avec les **figures 8 et 9** une deuxième variante de ce deuxième mode de réalisation de l'invention baptisé « TR Solo Groupées » » par les inventeurs.

Cette deuxième vise à réduire le nombre de ressources mises en oeuvre lors de l'étape de détermination du déphasage (71) mise en oeuvre par porteuse réservée activée selon la première variante.

En effet, cette étape requiert qu'il y ait autant d'entités de détermination de déphasage qu'il n'y a de porteuses réservées activées par itération.

Pour ce faire, on propose selon cette deuxième variante du deuxième mode de réalisation une « factorisation » de l'étape de détermination du déphasage telle qu'illustrée par la **figure 9** illustrant le dispositif correspondant, pour une itération, à cette deuxième variante du deuxième mode de réalisation, dont les modules et entités sont pilotés par un processeur (non représenté) d'une unité de traitement (non représentée), elle même pilotée par un programme d'ordinateur (non représenté) stocké dans une mémoire (non représentée) et mettant e oeuvre le procédé de transmission selon l'invention.

Ainsi, une seule étape (92) de détermination dudit déphasage est mise en oeuvre pour lesdites au moins deux porteuses réservées activées simultanément.

Pour y parvenir, cette étape de détermination du déphasage est précédée d'une étape d'addition (91) des M échantillons temporels obtenus respectivement pour chacune desdites au moins deux porteuses réservées activées simultanément.

Ainsi, A-1 entités de détermination de déphasage comprenant chacune quatre multiplieurs et deux additionneurs/soustracteurs sont remplacées par un additionneur mettant en oeuvre l'étape d'addition 91 illustrée sur la **figure 9.**

En d'autres termes, selon cet aspect particulier, les trois étapes d'obtention (13), d'application (14) et d'addition (15) sont respectivement mises en oeuvre pour chaque porteuse réservée activée, toutefois une même valeur de déphasage est appliquée à chacune.

De même que pour le premier mode de réalisation, dans ce deuxième mode de réalisation, les M échantillons temporels (401) représentatifs du symbole considérés sont tout d'abord obtenus 10 et mémorisés, et P pics sont détectés 11 tels qu'encerclés sur la visualisation temporelle de la première itération de la **figure 8.**

Lors de la première itération de cette première variante de ce deuxième mode de réalisation, les deux premières porteuses $P_{g=1,i=1}$ et $P_{g=1,i=2}$ réservées 51, 52 sont activées (12) par ajout d'une puissance prédéterminée définie par un opérateur.

Puis, les M échantillons temporels 510 représentatifs de la première porteuse réservée activée 51 et les M échantillons temporels 520 représentatifs de la deuxième porteuse réservée activée 52, sont obtenus (13) en parallèle, par les entités respectives d'obtention 130 de la **figure 9,** en supposant pour chacune de ces porteuses réservées activées, que toutes les autres porteuses sont mises à zéro, et prennent la forme de peignes d'impulsions distincts qui diffère du kernel similaire à une seule impulsion temporelle, mis en oeuvre selon les techniques TR de l'art antérieur telles qu'illustrées par les **figures 1 et 2.**

Puis, les peignes d'impulsions temporelles 510 et 512 sont additionnés (91) tels que :

$$c_{g,s} = c_{g=1,i=1}[k] + c_{g=1,i=2}[k] \text{ ou encore } c_{g,s} = \sum_{i \in A} c_{g,i}$$

et un unique déphasage est déterminé (93) de la manière suivante :

$$\phi_{g,s} = \frac{3\pi}{2} + \arctan\left(\frac{\sum_{v\in maxPos} Re(x_{g=1}[v]).Re(c_{g,s}[v]) + Im(x_{g=1}[v]).Im(c_{g,s}[v])}{\sum_{v\in maxPos} Im(x_{g=1}[v]).Re(c_{g,s}[v]) - Re(x_{g=1}[v]).Im(c_{g,s}[v])}\right)$$

avec :

$x_{g=1}$ un vecteur temporel comprenant les M échantillons (401) représentatifs du symbole lors de la première itération (g=1),

*maxPos* l'ensemble des positions des P échantillons détectés et v l'une desdites positions lors de la première itération (g=1).

Ensuite, les deux peignes 510 et 520 d'impulsions temporelles correspondant à ces deux porteuses activées, sont déphasés (14) en parallèle de la manière suivante :

$$c_{g=1,i=1}[k]_d = \frac{A_{max}}{M}.e^{-j\phi_{g,s}}.e^{j\frac{2\pi.P_{g=1,i=1}.k}{M}}, k\epsilon[0, M-1],$$

$$c_{g=1,i=2}[k]_d = \frac{A_{max}}{M}.e^{-j\phi_{g,s}}.e^{j\frac{2\pi.P_{g=1,i=2}.k}{M}}, k\epsilon[0, M-1]$$

Une fois ces peignes d'impulsion déphasés (également nommé « kernel peigne » déphasé), ils sont tous deux ajoutés, par l'entité d'addition 150 de **la figure 9,** aux M échantillons temporels 401 représentatifs du symbole considéré, délivrant M nouveaux échantillons temporels $x_{g=2}[k]$ 502 représentatifs du symbole à utiliser pour l'étape de détection 11 de la deuxième itération tels que :

$$x_{g=2}[k] = x_{g=1}[k] + c_{g=1,i=1}[k]_d + c_{g=1,i=2}[k]_d \text{ ou encore } x_{g=2}[k] = x_{g=1}[k] + \sum_{i\in A} c_{g,i_d}$$

et ainsi de suite... jusqu'au deux dernières porteuses réservées 56 et 57 qui n'ont pas encore été activées.

## Revendications

1. Procédé de transmission d'un signal source multiporteuse, comprenant des symboles constitués d'un ensemble de porteuses, destinées à être émises simultanément et comprenant des porteuses réservées à au moins un traitement de réduction du rapport puissance crête à puissance moyenne dudit signal source, et des porteuses de données, ledit procédé comprenant les étapes suivantes :

   - génération (101) d'un signal additionnel, et addition audit signal source dudit signal additionnel, délivrant un signal optimisé présentant un rapport puissance crête à puissance moyenne inférieur au rapport puissance crête à puissance moyenne dudit signal source,
   - transmission (102) dudit signal optimisé,

   **caractérisé en ce que** ladite étape de génération et d'addition d'un signal additionnel comprend, pour chaque symbole dudit signal source, une étape d'obtention de M échantillons temporels représentatifs dudit symbole, et au moins une itération (16) des étapes suivantes:

   - détection (11) de P échantillons temporels parmi lesdits M échantillons temporels représentatifs dudit symbole, lesdits P échantillons étant les P échantillons d'amplitude les plus élevées parmi lesdits M échantillons, ou lesdits P échantillons présentant une puissance supérieure à un seuil prédéterminé,
   - dans le domaine fréquentiel, activation (12) d'au moins une desdites porteuses réservées dudit symbole, par ajout d'une puissance prédéterminée sur ladite au moins une desdites porteuses réservées,
   - pour chaque porteuse réservée activée :

     ◦ obtention (13) de M échantillons temporels représentatifs de ladite porteuse réservée activée,

∘ application (14) d'un déphasage tenant compte desdits P échantillons détectés, auxdits M échantillons temporels représentatifs de ladite porteuse réservée activée, délivrant M échantillons temporels représentatifs d'un signal additionnel associé à ladite porteuse réservée activée,

∘ addition (15) des M échantillons temporels représentatifs dudit signal additionnel associé à ladite porteuse réservée activée auxdits M échantillons temporels représentatifs dudit symbole, délivrant M échantillons temporels représentatifs dudit symbole à utiliser pour l'étape de détection de l'itération suivante.

2. Procédé de transmission selon la revendication 1, **caractérisé en ce que** chaque porteuse réservée est activée (12) une unique fois au cours de ladite étape de génération d'un signal additionnel.

3. Procédé de transmission selon l'une quelconque des revendications 1 ou 2, **caractérisé en ce que** ledit déphasage tient compte à la fois de l'amplitude desdits P échantillons détectés, et de l'amplitude de P échantillons, de même position que lesdits P échantillons détectés, appartenant auxdits M échantillons temporels représentatifs de ladite au moins une porteuse réservée activée.

4. Procédé de transmission selon la revendication 3, **caractérisé en ce que** ledit déphasage est défini par l'équation suivante dans le domaine temporel discret :

$$\phi = \frac{3\pi}{2} + \arctan\left(\frac{\sum_{v \epsilon maxPos} Re(x[v]).Re(c[v]) + Im(x[v]).Im(c[v])}{\sum_{v \epsilon maxPos} Im(x[v]).Re(c[v]) - Re(x[v]).Im(c[v])}\right)$$

avec :

$x$ un vecteur temporel comprenant lesdits M échantillons représentatifs dudit symbole,
$maxPos$ l'ensemble des positions desdits P échantillons détectés et $v$ l'une desdites positions,
$c$ un vecteur temporel comprenant lesdits M échantillons représentatifs de ladite porteuse réservée activée.

5. Procédé de transmission selon l'une quelconque des revendications précédentes, **caractérisé en ce qu'**au moins deux porteuses réservées dudit symbole sont activées simultanément.

6. Procédé de transmission selon la revendication 5, **caractérisé en ce qu'**une étape de détermination (71) de déphasage est mise en oeuvre pour chacune desdites au moins deux porteuses réservées activées simultanément.

7. Procédé de transmission selon la revendication 5, **caractérisé en ce qu'**une seule étape de détermination (92) dudit déphasage est mise en oeuvre pour lesdites au moins deux porteuses réservées activées simultanément, ladite étape de détermination dudit déphasage étant précédée d'une étape d'addition (91) des M échantillons temporels obtenus respectivement pour chacune desdites au moins deux porteuses réservées activées simultanément.

8. Dispositif de transmission d'un signal source multiporteuse, comprenant des symboles constitués d'un ensemble de porteuses, destinées à être émises simultanément et comprenant des porteuses réservées à au moins un traitement de réduction du rapport puissance crête à puissance moyenne dudit signal source, et des porteuses de données, ledit dispositif comprenant :

- un module de génération d'un signal additionnel et d'addition audit signal source dudit signal additionnel, délivrant un signal optimisé présentant un rapport puissance crête à puissance moyenne inférieur au rapport puissance crête à puissance moyenne dudit signal source,
- un module de transmission dudit signal optimisé,

**caractérisé en ce que** ledit module de génération et d'addition d'un signal additionnel comprend, pour chaque symbole dudit signal source, une entité d'obtention de M échantillons temporels représentatifs dudit symbole, et comprend en outre:

- une entité (110) de détection de P échantillons temporels parmi lesdits M échantillons temporels représentatifs dudit symbole, lesdits P échantillons étant les P échantillons d'amplitude les plus élevées parmi lesdits M échantillons, ou lesdits P échantillons présentant une puissance supérieure à un seuil prédéterminé,
- une entité d'activation d'au moins une desdites porteuses réservées dudit symbole, par ajout d'une puissance prédéterminée sur ladite au moins une desdites porteuses réservées,

- pour chaque porteuse réservée activée :

◦ une entité (130) d'obtention de M échantillons temporels représentatifs de ladite porteuse réservée activée,
◦ une entité (140) d'application d'un déphasage tenant compte desdits P échantillons détectés, auxdits M échantillons temporels représentatifs de ladite porteuse réservée activée, délivrant M échantillons temporels représentatifs d'un signal additionnel associé à ladite porteuse réservée activée,
◦ une entité (150) d'addition des M échantillons temporels représentatifs dudit signal additionnel associé à ladite porteuse réservée activée auxdits M échantillons temporels représentatifs dudit symbole, délivrant M échantillons temporels représentatifs dudit symbole à utiliser pour l'étape de détection de l'itération suivante.

9. Signal représentatif d'un signal transmis selon le procédé de transmission de l'une quelconque des revendications 1 à 7.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de transmission selon l'une au moins des revendications 1 à 7, lorsqu'il est exécuté sur un ordinateur.

**Patentansprüche**

1. Verfahren zur Übertragung von einem Mehrträgerquellensignal, das Symbole umfasst bestehend aus einem Satz von Trägern, die gleichzeitig emittiert werden sollen, und Träger, die reserviert sind für mindestens eine Verarbeitung zur Reduktion des Spitzenleistungsverhältnisses auf eine mittlere Leistung des Quellensignals, sowie Träger für Daten umfassen, wobei das Verfahren folgende Schritte umfasst:

- Erzeugung (101) eines zusätzlichen Signals und Hinzufügung des zusätzlichen Signals zu dem Quellensignal, was ein optimiertes Signal ergibt, das ein gegenüber dem Verhältnis von Spitzenleistung zu mittlerer Leistung des Quellensignals kleineres Verhältnis von Spitzenleistung zu mittlerer Leistung zeigt,
- Übertragen (102) des optimierten Signals,

**dadurch gekennzeichnet, dass** der Schritt der Erzeugung und der Hinzufügung eines zusätzlichen Signals zu dem Quellensignal einen Schritt der Gewinnung von M für das Symbol repräsentativen Zeitabtastwerten für jedes Symbol des Quellensignals umfasst und wenigstens eine Iteration (16) der folgenden Schritte:

- Detektion (11) von P Zeitabtastwerten aus den M für das Symbol repräsentativen Zeitabtastwerten, wobei die P Abtastwerte die P Abtastwerte mit der höchsten Amplitude unter den M Abtastwerten sind oder die P Abtastwerte eine Leistung aufweisen, die größer als ein vorbestimmter Schwellenwert ist,
- im Frequenzbereich, Aktivierung (12) mindestens eines der für das Symbol reservierten Träger durch Hinzufügung einer vorbestimmten Leistung zu dem mindestens einen reservierten Träger,
- für jeden reservierten aktivierten Träger:

◦ Gewinnung (13) von M für den reservierten aktivierten Träger repräsentativen Zeitabtastwerten,
◦ Anwendung (14) einer Phasenverschiebung, welche die P detektierten Abtastwerte berücksichtigt, auf die M für den reservierten aktivierten Träger repräsentativen Zeitabtastwerte, was M für ein dem reservierten aktivierten Träger zugeordneten Zusatzsignal repräsentative Zeitabtastwerte ergibt,
◦ Hinzufügung (15) der M für das mit dem reservierten aktivierten Träger zugeordnete Zusatzsignal repräsentativen Zeitabtastwerte zu den M für das Symbol repräsentativen Zeitabtastwerten, was M für das Symbol repräsentative Zeitabtastwerte ergibt, die für den Detektionsschritt der nachfolgenden Iteration verwendet werden sollen.

2. Übertragungsverfahren nach Anspruch 1, **dadurch gekennzeichnet, dass** jeder reservierte Träger nur einmal im Verlauf des Schrittes der Erzeugung eines Zusatzsignals aktiviert (12) wird.

3. Übertragungsverfahren nach einem der Ansprüche 1 oder 2, **dadurch gekennzeichnet, dass** die Phasenverschiebung gleichzeitig die Amplitude der P detektierten Abtastwerte und die Amplitude der P Abtastwerte an derselben Position wie die P detektierten Abtastwerte berücksichtigt, die zu den M für den mindestens einen reservierten aktivierten Träger repräsentativen Zeitabtastwerten gehören.

4. Übertragungsverfahren nach Anspruch 3, **dadurch gekennzeichnet, dass** die Phasenverschiebung durch die folgende Gleichung im diskreten Zeitbereich definiert ist:

$$\phi = \frac{3\pi}{2} + \arctan\left(\frac{\sum_{v \in maxPos} Re(x[v]).Re(c[v]) + Im(x[v]).Im(c[v])}{\sum_{v \in maxPos} Im(x[v]).Re(c[v]) - Re(x[v]).Im(c[v])}\right)$$

mit:

$x$ ein Zeitvektor, der die für das Symbol repräsentativen Abtastwerte aufweist,
$maxPos$ die Gesamtheit der Positionen der P detektierten Abtastwerte und $v$ eine dieser Positionen, $c$ ein Zeitvektor, der die für den reservierten aktivierten Träger repräsentativen Abtastwerte umfasst.

5. Übertragungsverfahren nach einem der vorstehenden Ansprüche, **dadurch gekennzeichnet, dass** wenigstens zwei reservierte Träger des Symbols gleichzeitig aktiviert werden.

6. Übertragungsverfahren nach Anspruch 5, **dadurch gekennzeichnet, dass** ein Schritt zur Bestimmung (71) der Phasenverschiebung für jeden der mindestens zwei gleichzeitig aktivierten reservierten Träger implementiert wird.

7. Übertragungsverfahren nach Anspruch 5, **dadurch gekennzeichnet, dass** ein einziger Schritt zur Bestimmung (92) der Phasenverschiebung für jeden der mindestens zwei aktivierten reservierten Träger implementiert wird, wobei dem Schritt zur Bestimmung der Phasenverschiebung ein Additionsschritt (91) der M Zeitabtastwerte vorausgeht, die jeweils für jeden der wenigstens zwei gleichzeitig aktivierten reservierten Träger gewonnen wurden.

8. Vorrichtung zur Übertragung von einem Mehrträgerquellensignal, das Symbole umfasst bestehend aus einem Satz von Trägern, die gleichzeitig emittiert werden sollen, und Träger, die reserviert sind für mindestens eine Verarbeitung zur Reduktion des Spitzenleistungsverhältnisses auf eine mittlere Leistung des Quellensignals, sowie Träger für Daten umfassen, wobei die Vorrichtung umfasst:

- ein Modul zur Erzeugung eines zusätzlichen Signals und zur Hinzufügung des zusätzlichen Signals zu dem Quellensignal, was ein optimiertes Signal ergibt, das ein gegenüber dem Verhältnis von Spitzenleistung zu mittlerer Leistung des Quellensignals kleineres Verhältnis von Spitzenleistung zu mittlerer Leistung zeigt,
- ein Modul zur Übertragung des optimierten Signals,

**dadurch gekennzeichnet, dass** das Modul zur Erzeugung und zur Hinzufügung eines zusätzlichen Signals zu dem Quellensignal eine Einheit zur Gewinnung von M für das Symbol repräsentativen Zeitabtastwerten für jedes Symbol des Quellensignals umfasst und darüber hinaus umfasst:

- eine Einheit (110) zur Detektion von P Zeitabtastwerten aus den M für das Symbol repräsentativen Zeitabtastwerten, wobei die P Abtastwerte die P Abtastwerte mit der höchsten Amplitude unter den M Abtastwerten sind oder die P Abtastwerte eine Leistung aufweisen, die größer als ein vorbestimmter Schwellenwert ist,
- eine Einheit zur Aktivierung von mindestens einem der für das Symbol reservierten Träger durch Hinzufügung einer vorbestimmten Leistung zu dem mindestens einen reservierten Träger,
- für jeden reservierten aktivierten Träger:

∘ eine Einheit (130) zur Gewinnung von M für den reservierten aktivierten Träger repräsentativen Zeitabtastwerten,
∘ eine Einheit (140) zur Anwendung einer Phasenverschiebung, welche die P detektierten Abtastwerte berücksichtigt, auf die M für den reservierten aktivierten Träger repräsentativen Zeitabtastwerte, was M für ein dem reservierten aktivierten Träger zugeordneten Zusatzsignal repräsentative Zeitabtastwerte ergibt,
∘ eine Einheit (150) zur Hinzufügung der M für das mit dem reservierten aktivierten Träger zugeordnete Zusatzsignal repräsentativen Zeitabtastwerte zu den M für das Symbol repräsentativen Zeitabtastwerten, was M für das Symbol repräsentative Zeitabtastwerte ergibt, die für den Detektionsschritt der nachfolgenden Iteration verwendet werden sollen.

**9.** Signal, das für ein Signal repräsentativ ist, das nach einem Übertragungsverfahren gemäß einem der Ansprüche 1 bis 7 übertragen wurde.

**10.** Computerprogrammprodukt, das aus einem Kommunikationsnetzwerk herunterladbar und/oder auf einem computerlesbaren Träger gespeichert und/oder von einem Prozessor ausführbar ist, **dadurch gekennzeichnet, dass** es Programmcodeinstruktionen umfasst, um das Übertragungsverfahren nach wenigstens einem der Ansprüche 1 bis 7 auszuführen, wenn es auf einem Computer ausgeführt wird.

**Claims**

**1.** Method of transmission of a multi-carrier source signal, comprising symbols constituted by a set of carriers, intended to be sent out simultaneously and comprising carriers reserved for at least one processing operation for reducing the peak-to-average power ratio of said source signal, and data carriers,
said method comprising the following steps:

- generation (101) of an additional signal and addition to said source signal of said additional signal, delivering an optimized signal having a peak-to-average power ratio smaller than the peak-to-average power ratio of said source signal,
- transmission (102) of said optimized signal,

**characterized in that** said step of generation and addition of an additional signal comprises, for each symbol of said source signal, a step for obtaining M time samples representing said symbol and at least one iteration (16) of the following steps:

- detection (11) of P time samples from among said P time samples representing said symbol, said P samples being the P samples of the highest amplitude among said M samples, or said P samples presenting a power value above a pre-determined threshold,
- in the frequency domain, activation (12) of at least one of said reserved carriers of said symbol, by the addition of a pre-determined power to said at least one of said reserved carriers,
- for each activated reserved carrier:

  ∘ obtaining (13) M time samples representing said activated reserved carrier,
  ∘ applying (14) a phase shift, taking account of said P detected samples, to said M time samples representing said activated reserved carrier, delivering M time samples representing an additional signal associated with said activated reserved carrier,
  ∘ adding (15) the M time samples representing said additional signal associated with said activated reserved carrier to said M time samples representing said symbol, delivering M time samples representing said symbol to be used for the detection step of the next iteration.

**2.** Method of transmission according to claim 1, **characterized in that** each reserved carrier is activated (12) only once during said step for generating an additional signal.

**3.** Method of transmission according to any one of the claims 1 or 2, **characterized in that** said phase shift takes account, at the same time, of the amplitude of said P detected samples and of the amplitude of P samples having a same position as said detected P samples and belonging to said M time samples representing said at least one activated reserved carrier.

**4.** Method of transmission according to claim 3, **characterized in that** said phase shift is defined by the following equation in the discrete time domain: :

$$\phi = \frac{3\pi}{2} + \arctan\left(\frac{\sum_{vemaxPos} Re(x[v]).Re(c[v]) + Im(x[v]).Im(c[v])}{\sum_{vemaxPos} Im(x[v]).Re(c[v]) - Re(x[v]).Im(c[v])}\right)$$

with:

x being a time vector comprising the M samples representing said symbol,

*maxPos* all the positions of said P detected samples and *v* one of said positions,
c a time vector comprising said M samples representing said activated reserved carrier.

5. Method of transmission according to any one of the preceding claims, **characterized in that** at least two reserved carriers of said symbol are activated simultaneously.

6. Method of transmission according to claim 5, **characterized in that** a step (71) for determining a phase shift is implemented for each of said at least two simultaneously activated reserved carriers.

7. Method of transmission according to claim 5, **characterized in that** a single step (92) for determining said phase shift is implemented for said at least two simultaneously activated reserved carriers, said step for determining said phase shift being preceded by a step (92) for adding M time samples obtained respectively for each of said at least two simultaneously activated reserved carriers.

8. Device for transmitting a multi-carrier source signal comprising symbols constituted by a set of carriers that are to be sent out simultaneously, and comprising carriers reserved for at least one processing operation to reduce the peak-to-average power ratio of said source signal, and data carriers, said device comprising:

- a module for the generation of an additional signal and the addition to said source signal of said additional signal, delivering an optimized signal having a peak-to-average power ratio smaller than the peak-to-average power ratio of said source signal,
- a module for the transmission of said optimized signal,

**characterized in that** said module for for the generation and addition of an additional signal comprises, for each symbol of said source signal, an entity for obtaining M time samples representing said symbol, and further comprises:

- an entity (110) for detecting P time samples among said M time samples representing said symbol, said P samples being the P samples of highest amplitude among said M samples, or said P samples having power above a pre-determined threshold,
- an entity for activating at least one of said reserved carriers of said symbol, by addition of a pre-determined power value to said at least one of said reserved carriers,
- for each activated reserved carrier:

  ◦ an entity (130) for obtaining M time samples representing said activated reserved carrier,
  ◦ an entity (140) for applying a phase shift, taking account of said P detected samples, to said M time samples representing said activated reserved carrier, delivering M time samples representing an additional signal associated with said activated reserved carrier,
  ◦ an entity (150) for adding M time samples, representing said additional signal associated with said activated reserved carrier, to said M time samples representing said symbol, delivering M time samples representing said symbol to be used for the detection step of the following iteration.

9. Signal representing a signal transmitted according to the method of transmission of any one of the claims 1 to 7.

10. Computer program product downloadable from a communications network and/or stored on a carrier readable by a computer and/or executable by a microprocessor, **characterized in that** it comprises program code instructions for implementing the method of transmission according to any one of the claims 1 to 7, when it is executed on a computer.

Fig. 1

Fig. 2

Fig. 3

Fig. 4

EP 3 292 668 B1

Fig. 5

51  52    *Visualisation fréquentielle*                    *Visualisation temporelle*    401

**Itération 1**

$A_{max}$
$A_{ref}$

Pluralité_pics

→ C_Phase ←
Kernel_peigne          Déphasage_kernel      510
→ C_Phase ←
Autre Kernel_peigne    Déphasage_kernel      511

**Itération 2**

51 52 53  54
$A_{max}$
$A_{ref}$

Autre_pluralité_pics

502
→ C_Phase ←
Autre Kernel_peigne    Déphasage_kernel      520
→ C_Phase ←
Autre Kernel_peigne    Déphasage_kernel      521

Ajout Kernel peignes

**Itération finale**

Dernières
51 52 53  54  porteuses activées 56 57
$A_{max}$
$A_{ref}$

Autre_pluralité_pics

536
→ C_Phase ←
Autre Kernel_peigne    Déphasage_kernel      530
→ C_Phase ←
Autre Kernel_peigne    Déphasage_kernel      531

Fig. 6

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• CN 104144140

**Littérature non-brevet citée dans la description**

• **M. MROUÉ et al.** Performance and Implementation Evaluation of TR PAPR Reductions Methods for DVB-T2. *International Journal of Digital Multimedia Broadcasting,* vol. 2010, 10, http://dx.doi.org/10.1155/2010/797393